# EUROPEAN PATENT APPLICATION

(11) **EP 0 719 800 A1**
(43) Date of publication of application: **03.07.1996**
(21) Application number: 95120363.7
(22) Date of filing: 21.12.1995
(51) Int. Cl.: C08F 10/02, C08F 4/649

(54) **Catalysts for the (co)polymerization of ethylene**

(30) Priority: 29.12.1994 IT MI942671
(71) Applicant: Montell Technology Company bv, NL-2132 MS Hoofddorp (NL)
(72) Inventor: Dall'Occo, Tiziano, I-44100 Ferrara (IT); Morini, Giampiero, I-27058 Voghera (PV) (IT); Albizzati, Enrico, I-28041 Arona (NO) (IT)
(74) Representative: Zanoli, Enrico

(57) **Abstract**

The present invention relates to new catalysts for the polymerization of ethylene and its blends with CH₂=CHR olefins, where R is an alkyl, cycloalkyl or aryl radical having 1-12 carbon atoms, comprising the product of the reaction between:
(A) a solid catalytic component comprising a magnesium halide in an active form and a titanium compound containing at least one Ti-halogen bond;
(B) an Al-alkyl compound
(C) an electron-donor compound selected from the 1,3-diethers in which at least one of the two OR groups is different from OMe.
Using these catalysts it is possible to produce (co)polymers of ethylene with narrow MWD, at yields substantially the same as with conventional catalysts not containing electron-donor compounds.

## Description

The present invention relates to catalysts for the polymerization of ethylene and its mixtures with CH₂=CHR olefins, where R is an alkyl, cycloalkyl or aryl radical having 1-12 carbon atoms, comprising the product of the reaction between a solid catalytic component containing Ti, Mg and halogen, an Al-alkyl compound and a particular electron-donor compound. The catalyst of the invention finds appropriate use in processes of (co)polymerization of ethylene for preparing (co)polymers that have a narrow molecular weight distribution (MWD). The MWD is an important characteristic of ethylene polymers as it influences both the rheological behaviour, and hence processability, and the final mechanical properties of the polymer. Especially in the case of LLDPE, polymers with narrow MWD are suitable for films and for injection moulding, since the problems of distortion and shrinkage of the manufactured article are reduced to a minimum.

For polymers of ethylene, the range of the molecular weight distribution is generally expressed in terms of the melt flow ratio F/E, which is the ratio of the melt index measured with a weight of 21.6 kg (melt index F) to that measured with a weight of 2.16 kg (melt index E). Measurements of melt index are effected according to ASTM D-1238, at 190°C.

A catalyst for preparing (co)polymers of ethylene with narrow MWD is described in European Patent Application EP-A-373999: the catalyst comprises a solid catalytic component consisting of a titanium compound supported on magnesium chloride, an Al-alkyl compound and an electron-donor compound (external donor) selected from the monoethers with the formula R'OR''. Good results in terms of narrow MWD are only obtained when the solid component also contains an internal electron-donor compound (diisobutylphthalate).

European Patent Application 94109979.8 describes a catalyst that is suitable for the production of (co)polymers of ethylene that have a narrow MWD, comprising a solid catalytic component, containing Mg, Ti and halogen, which is reacted with an Al-alkyl compound and with an electron-donor compound chosen from the group of the 1-3-diethers. The examples given relate exclusively to derivatives of 1,3-dimethoxypropane and it is found that these diethers, though making it possible to obtain a narrow MWD, lead to a lowering of the polymerization yields in comparison with catalysts in which these diethers are not present.

New catalysts have now been found for the polymerization of ethylene and of its blends with one or more CH₂=CHR olefins which comprise particular external electron-donor compounds and which make it possible to obtain (co)polymers of ethylene with a narrow MWD. Surprisingly, these catalysts, in contrast to the catalysts of the known art, though comprising external electron-donor compounds from the group of the diethers, do not give rise to substantial reductions of polymerization yields in comparison with catalysts in which the external electron-donor compound is not present. Furthermore, the polymers obtained using the catalysts of the present invention display excellent morphological characteristics, for example high bulk density.

The catalysts of the invention comprise the product of the reaction between:
(a) a solid catalytic component comprising a magnesium halide in an active form and a titanium compound containing at least one Ti-halogen bond;
(b) an Al-alkyl compound;
(c) an electron-donor compound selected from the 1,3-diethers with the formula (I): 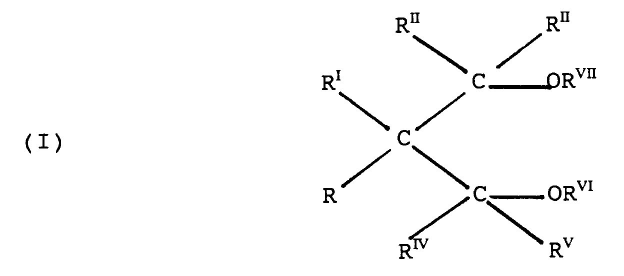 in which R, R^{I}, R^{II}, R^{III}, R^{IV}, and R^{V}, which may be identical or different, are hydrogen or linear or branched alkyl radicals, or cycloalkyl, aryl, alkaryl or aralkyl radicals that have 1-18 carbon atoms, with the condition that R and R^{I} cannot be hydrogen simultaneously; R^{VI} and R^{VII}, which may be identical or different, are linear or branched alkyl radicals, or cycloalkyl, aryl, alkaryl or aralkyl radicals that have 1-18 carbon atoms, with the condition that they cannot be methyl simultaneously; when the radicals denoted by R^{I} to R^{V} are hydrogen, R cannot be methyl; the radicals denoted by R^{II} to R^{V}, bound to the same carbon atom, can form one or more cyclic structures; the compounds 2,2-diisobutyl-1,3-dibutoxypropane, and 2,2-diisobutyl-1,3-diethoxypropane being excluded.

The magnesium halide in active form present in solid component (a) is well known in the art and is characterized by an X-ray spectrum in which the most intense diffraction line that appears in the spectrum of the non-active chloride is diminished in intensity and in the said spectrum a halo is observed, the maximum intensity of which is shifted towards lower angles relative to that of the most intense line.

Preferred, among the titanium compounds containing at least one Ti-halogen bond, are those that have the formula Ti(OR)_{n-y}X_{y}, in which n is the valence of the titanium and y is a number between 1 and n.

The solid component (a) can be prepared conveniently by reaction between a titanium compound with the formula Ti(OR)ₙ₋ₘXₘ, where n is the valence of the titanium and m is a number between 0 and n, and a magnesium chloride obtained by dealcoholizing an adduct MgCl₂.pROH, where p is a number from 1 to 6 and R is a hydrocarbon radical that has 1-12 carbon atoms. If necessary, the reaction can be carried out in the presence of a halogenating compound or of a reducing compound or of a mixture of both or in the presence of a compound that has halogenating and reducing activity.

Examples of preparation of the solid catalytic component are described in Patents USP 4 218 339 and USP 4 472 520, the descriptions of which are included here for reference. The solid components of the catalyst can also be prepared according to the methods described in Patents USP 4 748 221 and 4 803 251. Catalytic components possessing a regular morphology, for example spherical or spheroidal, are particularly preferred. Examples of these components are described in Patent USP 4 399 054 and in Patent Applications EP-A-395083, EP-A-553805, EP-A-553806, EP-A-601525 and EP-A-604846, the descriptions of which are included here for reference.

The aluminium-alkyl compound (b) is preferably selected from the aluminium trialkyls, such as Al-trimethyl, Al-triethyl, Al-triisobutyl, Al-tri-n-butyl, Al-tri-n-octyl. It is also possible to use mixtures of Al-trialkyls with Al-alkyl halides or Al-alkyl sesquihalides such as AlMe₂Cl, AlEt₂Cl and Al₂Et₃Cl₃, as well as compounds containing two or more Al atoms linked together via O or N atoms or SO₃ or SO₄ groups.

The electron-donor compound (c) is preferably chosen from among the 1,3-diethers with the formula (I) in which R^{VI} and R^{VII} are linear or branched C₂-C₁₂ hydrocarbon radicals and R and R^{I}, which may be identical or different, are chosen from the group consisting of propyl, isopropyl, isobutyl, t-butyl, pentyl, isopentyl, cyclopentyl, hexyl, 1,5-dimethylhexyl, cyclohexyl, methylcyclohexyl, ethylcyclohexyl, heptyl, 3,7-dimethyloctyl, and phenyl.

Some examples of 1,3-diethers that can be used in the catalysts of the invention are: 2-methyl-2-isopropyl-1,3-diethoxypropane, 2,2-diphenyl-1,3-dipropoxypropane, 2,2-diphenyl-1,3-dipentoxypropane, 2,2-diphenyl-1-methoxy-3-pentoxypropane, 2,2-dibenzyl-1,3-diethoxypropane, 2,2-bis-(cyclohexylmethyl)-1,3-diethoxypropane, 2-isopentyl-2-isopropyl-1,3-diethoxypropane, 2,2,4-trimethyl-1,3-dibutoxypentane, 1,1'-bis(ethoxymethyl)cyclohexane, (+/-)2,2'-bis-(ethoxymethyl)norbornane, 2-isopropyl-2-(3,7-dimethyloctyl)-1,3-dibutoxypropane, 2,2-diisopropyl-1,3-dipropoxypropane, 2-isopropyl-2-cyclohexylmethyl-1,3-dipentoxypropane, 2,2-diisopentyl-1,3-diethoxypropane, 2-isopropyl-2-cyclopentyl-1,3-diethoxypropane, 2,2-dicyclopentyl-1,3-dipropoxypropane, 2-heptyl-2-pentyl-1,3-diethoxypropane, 2,2-dicyclohexyl-1,3-dibutoxypropane, 2,2-dipropyl-1,3-diethoxypropane, 2-isopropyl-2-isobutyl-1,3-dipentoxypropane, 2,2-dicyclohexyl-1,3-diisobutoxypropane, 2-isopropyl-2-isobutyl-1,3-di-sec-butoxypropane, 2,2-dicyclopentyl-1,3-diisopropoxypropane, 2,2-diisopropyl-1-methoxy-3-propoxypropane, 2-heptyl-2-pentyl-1-methoxy-3-ethoxypropane, 2,2-dicyclohexyl-1-butoxy-3-methoxypropane, 2-isopropyl-2-isobutyl-1-methoxy-3-sec-butoxypropane. The 1,3-diethers can be prepared advantageously in the manner described in Patent EP-361493, the description of which is included here for reference.

The catalysts of the invention find appropriate application in processes of polymerization of ethylene and its blends with CH₂=CHR olefins, where R is an alkyl, cycloalkyl or aryl radical that has 1-12 carbon atoms, either in liquid phase or in gas phase, obtaining polymers that are characterized by a narrow MWD. For example, it is possible to obtain: high-density polyethylenes (HDPE; density greater than 0.940) including homopolymers of ethylene and copolymers of ethylene with alpha olefins that have from 3 to 12 carbon atoms; linear low-density polyethylenes (LLDPE, density less than 0.940) and linear polyethylenes with very low and ultra-low density (VLDPE and ULDPE; density less than 0.920, up to 0.880) consisting of copolymers of ethylene and one or more alpha olefins that have from 3 to 12 carbon atoms and with a content in moles of units derived from the ethylene of more than 80%.

The following examples further illustrate the present invention. Naturally it is possible for variants to be effected without straying from the scope of the present invention.

The properties indicated are determined according to the following methods:
- MIE flow index: ASTM-D 1238, condition E
- MIF flow index: ASTM-D 1238, condition F
- Bulk density: DIN-53194
- Morphology of the polymer: ASTM-D 1921-63
- Intrinsic viscosity: ASTM 2857-70
- ΔH (enthalpy of fusion): this is determined by differential scanning calorimetry (DSC) effected with a Perkin Elmer DSC-7 instrument according to the following method. Samples of polymer enclosed within aluminium capsules are heated to 180°C and held at this temperature for about 4 minutes. After slow cooling (about 10°C/min) the samples are heated again to 180°C at a rate of 10°C/min. During this stage the peak temperature is taken as the melting point (Tm) and the subtended area is taken as the overall enthalpy of fusion.

### EXAMPLES

### Preparation of the spherical support (MgCl₂/EtOH ADDUCT)

The magnesium chloride/alcohol adduct was prepared following the method described in Example 2 of USP 4 399 054, but operating at 2000 rpm instead of at 10 000 rpm.

The adduct, containing about 3 mol of alcohol, had average size of about 60 µm with a range of dispersion of about 30-90 µm.

### General method of preparation of the solid component

The spherical support prepared according to the conditions stated above was submitted to a heat treatment, in a stream of N₂, in the temperature range 50-150°C until spherical particles were obtained with a residual alcohol content of about 35% (1.1 mol of alcohol per mole of MgCl₂). 300 g of this support were loaded into a 5000 cm³ reactor in suspension with 3000 cm³ of anhydrous hexane. While stirring, at room temperature, a hexane solution of AlEt₃ (107 g/l) was slowly introduced, to give a molar ratio Al/EtOH of about 0.5. It was heated to 60°C and maintained at this temperature for 60 min, at the end of which the solvent was removed by evaporation.

260 g of support obtained in this way were loaded into a 5000 cm³ reactor together with 3000 cm³ of anhydrous hexane. While stirring, 242 g of Ti(OBu)₄ were fed in at room temperature in 30 min.

Stirring was continued for a further 30 min and then 350 g of SiCl₄ diluted with 250 cm³ of hexane were fed in at room temperature in the space of 30 min. It was heated to 65°C in 40 min and this temperature was maintained for 3 hours, then the liquid phase was separated by sedimentation and siphoning. Then 7 washings were effected with hexane (3000 cm³ each time), 3 of which were at 60°C and 4 were at room temperature. The component in spherical form was dried at 50°C under vacuum.

The characteristics were as follows:

| | |
|---|---|
| - Total titanium | 7.95% (by weight) |
| - Mg | 11.75% (by weight) |
| - Cl | 43.2% (by weight) |
| - Residual Al | 0.45% (by weight) |
| - OEt | 6% (by weight) |
| - OBu | 19.8% (by weight) |

### EXAMPLE 1

### Polymerization of ethylene (HDPE)

Operating in a hydrogen atmosphere, 900 ml of a solution containing 5 mmol of TEAL in 1000 ml of hexane were placed in a 2.5-litre autoclave, equipped with a magnetic paddle stirrer, manometer, temperature indicator, catalyst charging system, feed lines for the monomers, and a jacket for thermostatic control, decontaminated beforehand by washing with ethylene at 70°C.

The catalytic suspension was prepared separately by placing 50 ml of the TEAL solution previously prepared and a quantity of from 10 to 15 grams of the solid component a) in a test-tube of the Schlenk type, at a temperature of 25°C. The two components were left in contact for 5 min, after which the aliquot of 2,2-diphenyl-1,3-dipropoxypropane (electron-donor compound c) stated in the table was added. The components were left in contact for a further 2 min and then the suspension was introduced into the autoclave.

The temperature of the autoclave was raised to 85°C, hydrogen was fed in up to an overall pressure of 6.3 bar and ethylene up to a total pressure of 11.6 bar which was kept constant throughout polymerization.

After 60 minutes, polymerization was discontinued by introducing 0.6 litre (at STP) of CO into the autoclave, and the autoclave was cooled to 30°C. The polymer suspension was then filtered and the polymer obtained was dried at 60°C under vacuum to constant weight. The conditions and the results of polymerization are given in Table 1.

### EXAMPLE 2

### Polymerization of ethylene (HDPE)

Polymerization was carried out according to the method described in Example 1 but using 2,2-diphenyl-1,3-dipentoxypropane as the electron-donor compound c). The conditions and the results of polymerization are given in Table 1.

### EXAMPLE 3

### Polymerization of ethylene (HDPE)

Polymerization was carried out according to the method described in Example 1 but using 2,2-diphenyl-1-methoxy-3-pentoxypropane as the electron-donor compound c). The conditions and the results of polymerization are given in Table 1.

### EXAMPLE 4 (for comparison)

Polymerization was carried out as described in Example 1 except that no electron-donor compound (c) was used. The conditions and the results of polymerization are given in Table 1.

### EXAMPLE 5 (for comparison)

Polymerization was conducted as described in Example 1 except that 2-isopropyl-2-isopentyl-1,3-dimethoxypropane was used as electron-donor compound (c). The conditions and the results of polymerization are given in Table 1.

### EXAMPLE 6

### Preparation of LLDPE

A steel autoclave with a capacity of 2.5 litres, equipped with a magnetic paddle stirrer, manometer, temperature indicator, system for charging the catalyst, lines for feed of the monomers and jacket for thermostatic control, was decontaminated by washing with propane at 70°C. 1200 ml of propane, 210 g of 1-butene, and the quantities of ethylene and hydrogen corresponding respectively to 7 and 2 bar of partial pressure, were introduced at room temperature, and then the reactor was heated to 70°C.

The catalytic suspension was prepared separately by placing 10 ml of a hexane solution containing 12 mmol of TEAL and approx. 0.025 g of the solid component a) in a test-tube of the Schlenk type, at a temperature of 25°C. The two components were left to precontact for a time of 5 min, at the end of which the aliquot of 2,2-diphenyl-1-methoxy-3-pentoxypropane (electron-donor compound c) stated in Table 1 was added. The components were left in contact for a further 2 min and then the suspension was introduced into the autoclave by means of ethylene overpressure.

The temperature was then raised to 75°C and kept constant throughout polymerization (2 hours). The total pressure was kept constant by feeding in an ethylene/1-butene mixture in a molar ratio of 18. Polymerization was discontinued by introducing 0.6 litre (at STP) of CO into the autoclave after rapid cooling to 30°C.

The reactor was then left to degas slowly and the polymer obtained was dried at 60°C under vacuum.

The conditions of polymerization and the data relating to the polymer are shown in Table 1.

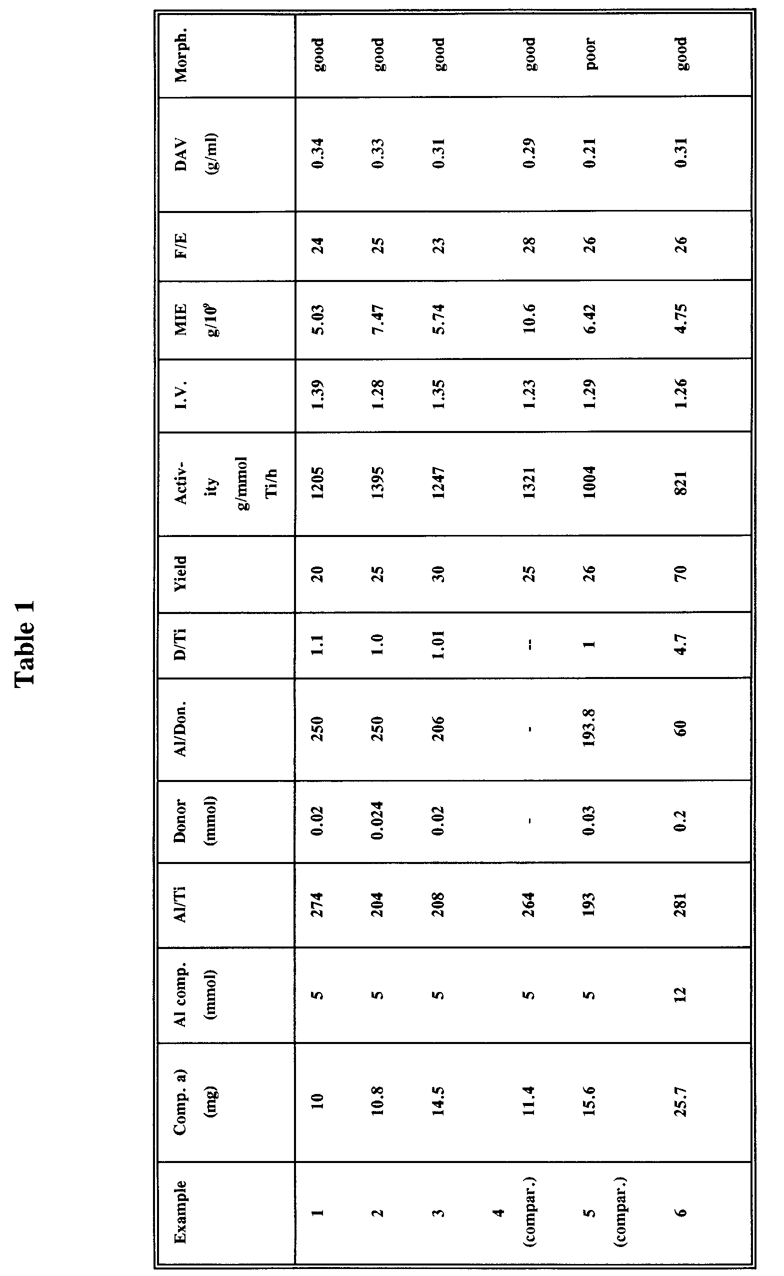

## Claims

1. Catalysts for the polymerization of ethylene and its mixtures with CH₂=CHR olefins, where R is an alkyl, cycloalkyl or aryl radical having 1-12 carbon atoms, comprising the product of the reaction between:
(a) a solid catalytic component comprising a magnesium halide in an active form and a titanium compound containing at least one Ti-halogen bond;
(b) an Al-alkyl compound;
(c) an electron-donor compound selected from the 1,3-diethers with the formula (I): 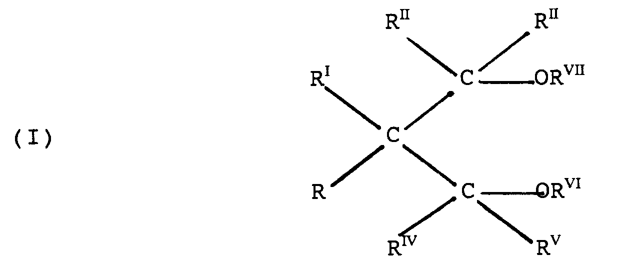 in which R, R^{I}, R^{II}, R^{III}, R^{IV}, and R^{V}, which may be identical or different, are hydrogen or linear or branched alkyl radicals, or cycloalkyl, aryl, alkaryl or aralkyl radicals that have 1-18 carbon atoms, with the limitation that R and R^{I} cannot be hydrogen simultaneously; R^{VI} and R^{VII}, which may be identical or different, are linear or branched alkyl radicals, or cycloalkyl, aryl, alkaryl or aralkyl radicals that have 1-18 carbon atoms, with the simultaneously; when the radicals denoted by R^{I} to R^{V} are hydrogen, R cannot be methyl; the radicals denoted by R^{II} to R^{V}, bound to the same carbon atom, can form one or more cyclic structures; the compounds 2,2-diisobutyl-1,3-dibutoxypropane and 2,2-diisobutyl-1,3-diethoxypropane being excluded.

2. Catalysts according to Claim 1 in which the electron-donor compound (c) is selected from the 1,3-diethers with the formula (I) in which R^{VI} and R^{VII} are C₂-C₈ alkyl radicals and R and R^{I}, which may be identical or different, are selected from the group consisting of propyl, isopropyl, isobutyl, t-butyl, pentyl, isopentyl, cyclopentyl, hexyl, 1,5-dimethylhexyl, cyclohexyl, methylcyclohexyl, ethylcyclohexyl, heptyl, 3,7-dimethyloctyl, and phenyl.

3. Catalysts according to Claim 1 in which the electron-donor compound (c) is selected from the group consisting of 2-methyl-2-isopropyl-1,3-diethoxypropane, 2,2-diphenyl-1,3-dipropoxypropane, 2,2-diphenyl-1,3-dipentoxypropane, 2,2-diphenyl-1-methoxy-3-pentoxypropane, 2,2-dibenzyl-1,3-diethoxypropane, 2,2-bis-(cyclohexylmethyl)-1,3-diethoxypropane, 2-isopentyl-2-isopropyl-1,3-diethoxypropane, 2,2,4-trimethyl-1,3-dibutoxypentane, 1,1'-bis(ethoxymethyl)cyclohexane, (+/-)2,2'-bis-(ethoxymethyl)norbornane, 2-isopropyl-2-(3,7-dimethyloctyl)-1,3-dibutoxypropane, 2,2-diisopropyl-1,3-dipropoxypropane, 2-isopropyl-2-cyclohexylmethyl-1,3-dipentoxypropane, 2,2-diisopentyl-1,3-diethoxypropane, 2-isopropyl-2-cyclopentyl-1,3-diethoxypropane, 2,2-dicyclopentyl-1,3-dipropoxypropane, 2-heptyl-2-pentyl-1,3-diethoxypropane, 2,2-dicyclohexyl-1,3-dibutoxypropane, 2,2-dipropyl-1,3-diethoxypropane, 2-isopropyl-2-isobutyl-1,3-dipentoxypropane, 2,2-dicyclohexyl-1,3-diisobutoxypropane, 2-isopropyl-2-isobutyl-1,3-di-sec-butoxypropane, 2,2-dicyclopentyl-1,3-diisopropoxypropane, 2,2-diisopropyl-1-methoxy-3-propoxypropane, 2-heptyl-2-pentyl-1-methoxy-3-ethoxypropane, 2,2-dicyclohexyl-1-butoxy-3-methoxypropane, 2-isopropyl-2-isobutyl-1-methoxy-3-sec-butoxypropane.

4. Catalysts according to Claim 1 in which the magnesium halide is a magnesium chloride and the titanium compound is selected from the compounds with the formula:
Ti(OR)_{n-y}X_{y}
in which n is the valence of the titanium and y is a number between 1 and n.

5. Catalysts according to Claim 4 in which the magnesium chloride is obtained by dealcoholizing an adduct MgCl₂.pROH, where p is a number from 1 to 6 and R is a hydrocarbon radical that has 1-12 carbon atoms.

6. Process for the polymerization of ethylene and of its blends with CH₂=CHR olefins, where R is an alkyl, cycloalkyl or aryl radical that has 1-12 carbon atoms, carried out in the presence of a catalyst comprising the product of the reaction between: (a) a solid catalytic component comprising a magnesium halide in an active form and a titanium compound containing at least one Ti-halogen bond;
(b) an Al-alkyl compound;
(c) an electron-donor compound selected from the 1, 3-diethers with the formula (I): 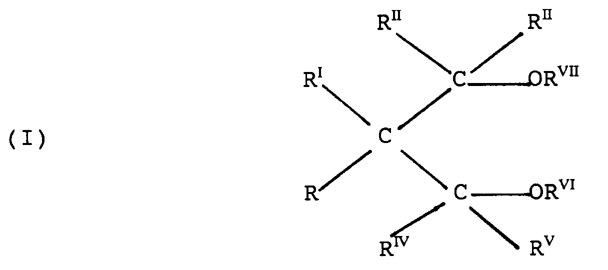 in which R, R^{I}, R^{II}, R^{III}, R^{IV}, and R^{V}, which may be identical or different, are hydrogen or linear or branched alkyl radicals, or cycloalkyl, aryl, alkaryl or aralkyl radicals that have 1-18 carbon atoms, with the condition that R and R^{I} cannot be hydrogen simultaneously; R^{VI} and R^{VII}, which may be identical or different, are linear or branched alkyl radicals, or cycloalkyl, aryl, alkaryl or aralkyl radicals that have 1-18 carbon atoms, with the condition that they cannot be methyl simultaneously; when the radicals denoted by R^{I} to R^{V} are hydrogen, R cannot be methyl; the radicals denoted by R^{II} to R^{V}, bound to one and the same carbon atom, can form one or more cyclic structures; the compounds 2,2-diisobutyl-1,3-dibutoxypropane, and 2,2-diisobutyl-1,3-diethoxypropane being excluded.

7. Process according to Claim 6 in which the electron-donor compound (c) is selected from the 1,3-diethers with the formula (I) in which R^{VI} and R^{VII} are C₂-C₈ alkyl radicals and R and R^{I}, which may be identical or different, are chosen from the group consisting of propyl, isopropyl, isobutyl, t-butyl, pentyl, isopentyl, cyclopentyl, hexyl, 1,5-dimethylhexyl, cyclohexyl, methylcyclohexyl, ethylcyclohexyl, heptyl, 3,7-dimethyloctyl, and phenyl.

8. Process according to Claim 6 in which the electron-donor compound (c) is selected from the group consisting of 2-methyl-2-isopropyl-1,3-diethoxypropane, 2,2-diphenyl-1,3-dipropoxypropane, 2,2-diphenyl-1,3-dipentoxypropane, 2,2-diphenyl-1-methoxy-3-pentoxypropane, 2,2-dibenzyl-1,3-diethoxypropane, 2,2-bis-(cyclohexylmethyl)-1,3-diethoxypropane, 2-isopentyl-2-isopropyl-1,3-diethoxypropane, 2,2,4-trimethyl-1,3-dibutoxypentane, 1,1'-bis(ethoxymethyl)cyclohexane, (+/-)2,2'-bis-(ethoxymethyl)norbornane, 2-isopropyl-2-(3,7-dimethyloctyl)-1,3-dibutoxypropane, 2,2-diisopropyl-1,3-dipropoxypropane, 2-isopropyl-2-cyclohexylmethyl-1,3-dipentoxypropane, 2,2-diisopentyl-1,3-diethoxypropane, dipropoxypropane, 2-isopropyl-2-cyclohexylmethyl-1,3-dipentoxypropane, 2,2-diisopentyl-1,3-diethoxypropane, 2-isopropyl-2-cyclopentyl-1,3-diethoxypropane, 2,2-dicyclopentyl-1,3-dipropoxypropane, 2-heptyl-2-pentyl-1,3-diethoxypropane, 2,2-dicyclohexyl-1,3-dibutoxypropane, 2,2-dipropyl-1,3-diethoxypropane, 2-isopropyl-2-isobutyl-1,3-dipentoxypropane, 2,2-dicyclohexyl-1,3-diisobutoxypropane, 2-isopropyl-2-isobutyl-1,3-di-sec-butoxypropane, 2,2-dicyclopentyl-1,3-diisopropoxypropane, 2,2-diisopropyl-1-methoxy-3-propoxypropane, 2-heptyl-2-pentyl-1-methoxy-3-ethoxypropane, 2,2-dicyclohexyl-1-butoxy-3-methoxypropane, 2-isopropyl-2-isobutyl-1-methoxy-3-sec-butoxypropane.

9. Process according to Claim 6 in which the magnesium halide is a magnesium chloride and the titanium compound is selected from the compounds with the formula:
Ti(OR)_{n-y}X_{y}
in which n is the valence of the titanium and y is a number between 1 and n.

10. Process according to Claim 9 in which the magnesium chloride is obtained by dealcoholizing an adduct MgCl₂.pROH, where p is a number from 1 to 6 and R is a hydrocarbon radical that has 1-12 carbon atoms.

11. Process according to one or more of the claims from 6 to 10 in which the polymer that is obtained contains up to is chosen from among 1-butene, 1-pentene, 4-methyl-1-pentene, 1-hexene, and 1-octene.
